# DEMANDE DE BREVET EUROPEEN

(11) **EP 4 715 280 A1**
(43) Date de publication de la demande: **25.03.2026**
(21) Numéro de dépôt: 25204101.7
(22) Date de dépôt: 23.09.2025
(51) Int. Cl.: F24F 11/00, F24F 11/58

(54) **STATION DE MESURE, ACCESSOIRE DE VENTILATION, INSTALLATION DE VENTILATION ET MÉTHODE DE PILOTAGE ASSOCIÉS**

(30) Priorité: 24.09.2024 FR 2410176
(71) Demandeur: Anjos Ventilation, 01230 Torcieu (FR)
(72) Inventeur: BARBARIN, Sacha, 01230 TORCIEU (FR); BARBARIN, Guillaume, 01230 TORCIEU (FR)
(74) Mandataire: Lavoix

(57) **Abrégé**

Cette station de mesure (100), configurée pour mesurer au moins un paramètre de qualité de l'air et pour piloter au moins un accessoire de ventilation (40), comprend au moins un capteur (110) d'un paramètre de qualité de l'air, et des moyens de communication (120), qui incluent des moyens de réception (122) d'informations d'appairage relatives au type et au nombre des accessoires de ventilation, et des moyens de transmission (124) pour transmettre des ordres à chaque accessoire de ventilation préalablement appairé. La station de mesure comprend une unité électronique de contrôle (126), et qui est configurée pour déterminer, en fonction de la configuration globale, un scénario de ventilation préféré, pour recevoir des valeurs mesurées par le capteur et pour déterminer les ordres à envoyer à chaque accessoire de ventilation en fonction des valeurs reçues et d'un scénario de ventilation préféré.

## Description

La présente invention concerne une station de mesure, un accessoire de ventilation configuré pour coopérer avec une telle station de mesure, une installation de ventilation comprenant une telle station de mesure et un tel accessoire de ventilation, ainsi qu'une méthode de pilotage d'une telle installation de ventilation.

L'invention concerne en particulier le domaine de la gestion de la qualité de l'air intérieur. De manière générale, les installations de ventilation actuelles reposent sur des dispositifs de pilotage agissant sur un seul composant. Par exemple, il est connu de disposer un capteur de CO₂ dans une pièce telle qu'une salle de classe, le capteur étant relié de manière filaire à un caisson de ventilation de manière à piloter le caisson de ventilation lorsque le taux de CO₂ dépasse un seuil prédéterminé. US-2022/19269-A1 décrit un exemple de méthode de dépollution de l'air intérieur.

Dans le domaine tertiaire ou industriel, il est également connu de concevoir des installations de ventilation spécifiquement pour chaque configuration. Les capteurs sont généralement connectés à une centrale de ventilation par des fils, ce qui est complexe à mettre en place. De telles installations sont relativement onéreuses, ce qui limite leur utilisation dans les bâtiments résidentiels. FR-3 007 827-A1 décrit un exemple de dispositif de commande déporté pour une installation de ventilation. Dans le domaine résidentiel et tertiaire, les systèmes existants sont basés principalement sur la régulation par rapport à l'humidité ou le CO₂. De telles installations peuvent ne pas être adaptés aux besoins des occupants.

C'est à ces problèmes qu'entend plus particulièrement remédier l'invention, en proposant une station de mesure qui permette de piloter des installations de ventilations dans de multiples configurations tout en restant facile à mettre en place.

À cet effet, l'invention concerne une station de mesure pour une installation de ventilation, la station de mesure étant configurée pour mesurer au moins un paramètre de qualité de l'air et pour piloter au moins un accessoire de ventilation de l'installation de ventilation, la station de mesure comprenant :
- au moins un capteur d'un paramètre de qualité de l'air autour de la station de mesure, le capteur étant soit un capteur intégré, qui est reçu dans un boitier de la station de mesure, soit un capteur déporté, qui est situé à l'extérieur et à distance du boitier,
- des moyens de communication, qui incluent :
   - des moyens de réception, qui sont configurés pour recevoir des informations de configuration relatives au type de chaque accessoire de ventilation et au nombre d'accessoires de ventilations de chaque type, de manière à appairer chaque accessoire de ventilation à la station de mesure, l'ensemble des informations de configuration reçues formant une configuration globale de l'installation de ventilation, et
   - des moyens de transmission, qui sont configurés pour transmettre à chaque accessoire de ventilation, préalablement appairé à la station de mesure, des ordres relatifs à des états de fonctionnement de l'accessoire de ventilation considéré,
- une unité électronique de contrôle, qui comprend une unité de calcul et une mémoire, et qui est configurée :
   - pour déterminer, en fonction de la configuration globale, un scénario de ventilation préféré,
   - pour recevoir des valeurs mesurées par le capteur de mesure et pour déterminer, en fonction des valeurs reçues et d'un scénario de ventilation préféré, les ordres à envoyer à chaque accessoire de ventilation.

Grâce à l'invention, lors de la mise en place de l'installation de ventilation, chaque accessoire est appairé à la station de mesure sans qu'il ne soit nécessaire de connecter physiquement l'accessoire de ventilation considéré à la station de mesure, tandis que la station de mesure comprend un ou plusieurs capteurs. L'installation de ventilation est ainsi simple et rapide à configurer, puis à piloter. L'installation de ventilation est également évolutive, c'est-à-dire que la mise en place de nouveaux accessoires, soit additionnels, soit en remplacement d'accessoires défaillants, se fait simplement en appareillant les nouveaux accessoires à la station de mesure. Avantageusement, l'appareillage se fait au moyen d'un smartphone, par exemple en scannant un identifiant unique, notamment un code QR, situé sur chaque accessoire de ventilation, l'identifiant unique étant ensuite transmis à la station de mesure par radiofréquence.

Selon des aspects avantageux mais non obligatoires de l'invention, une telle station de mesure peut incorporer une ou plusieurs des caractéristiques suivantes prises isolément ou selon toute combinaison techniquement admissible :
- Le au moins un capteur inclut un capteur de température et un capteur d'humidité.
- Le au moins un capteur inclut, en outre, au moins un capteur additionnel choisi parmi un capteur de CO2, un capteur de particules, un capteur de composés organiques volatils, un capteur de NOx, un capteur de SOx, et un capteur de formaldéhyde.
- Le au moins un capteur inclut un capteur intégré, la station de mesure comprenant un module de mesure, qui est reçu dans un boitier de la station de mesure et qui est interchangeable, le capteur intégré faisant partie du module de mesure.
- Les moyens de transmission sont des moyens de communication sans fil, qui fonctionnent selon un protocole de communication choisi dans une liste incluant les protocoles :
   - Bluetooth, défini par la norme IEEE 802.15.1:2005,
   - Bluetooth en réseau maillé, tel que défini par la norme IEEE 802.15.4:2009,
   - BLE, LoRa(WAN), ZigBee, tels que définis par la norme IEEE 802.15.4:2020.
- Les moyens de réception sont aptes à échanger des informations avec un smartphone, par exemple selon un protocole Bluetooth, tel que défini par la norme IEEE 802.15.1:2005, ou WiFi, tel que défini par la norme IEEE 802.11:2016 et ses révisions ou évolutions ultérieures, pour la réception des informations de configuration.
- Le au moins un capteur inclut un capteur déporté, les moyens de réception étant aptes à recevoir des informations en provenance du capteur déporté, notamment un capteur extérieur, le capteur déporté étant distinct du module de mesure et étant configuré pour mesurer un paramètre de qualité de l'air.
- Les moyens de communication incluent une passerelle Internet, la station de mesure étant configurée pour échanger des données avec un serveur distant, alors que la station de mesure est configurée pour :
   - envoyer au serveur distant des données relatives aux mesures de qualité de l'air et à la configuration globale, et
   - pour recevoir en provenance du serveur distant un scenario additionnel de ventilation et pour enregistrer le scénario additionnel dans la mémoire de l'unité électronique de contrôle, le scénario additionnel devenant le scénario de ventilation préféré.
- Le au moins un capteur inclut un module de mémoire, dans lequel sont enregistrés un ou plusieurs scénarii de ventilation,
- la station de mesure est configurée :
   - pour recevoir le ou les scénarii de ventilation enregistrés dans le module mémoire du capteur, puis
   - pour enregistrer ledit ou lesdits scénarii de ventilation dans la mémoire de l'unité de contrôle, puis
   - le scénario de ventilation préféré est le scénario ou l'un des scenarii transmis depuis le module mémoire du capteur.

L'invention concerne aussi un accessoire de ventilation, qui est propre à être appairé à la station de mesure telle que décrite précédemment, l'accessoire de ventilation comprenant :
- un passage d'air,
- au moins un organe d'actionnement, qui est commutable entre plusieurs configurations, de manière à influer sur le débit d'air au travers du passage d'air, chaque configuration de l'organe d'actionnement étant associée à un état de fonctionnement de l'accessoire de ventilation,
- un identifiant unique, par exemple sous la forme d'un QR code, et/ou d'une une puce électronique RFID ou NFC, l'identifiant unique étant associé de manière univoque au type de l'accessoire de ventilation considéré et étant prévu pour l'appairage de l'accessoire de ventilation à la station de mesure, et
- des moyens complémentaires de transmission, qui sont configurés pour coopérer avec les moyens de transmission de la station de mesure de sorte que, une fois que l'accessoire de ventilation est appairé à la station de mesure, l'accessoire de ventilation est apte à recevoir des ordres en provenance de la station de mesure et apte à basculer entre les états de fonctionnements de l'accessoire de ventilation considéré.

Avantageusement, l'accessoire de ventilation inclut un capteur déporté, qui est configuré pour mesurer un paramètre de qualité de l'air, l'accessoire de ventilation étant configuré pour coopérer avec les moyens de transmission et/ou avec les moyens de réception de la station de mesure, de manière à transmettre les résultats des mesures du capteur déporté à la station de mesure.

L'invention concerne aussi une installation de ventilation comprenant :
- la station de mesure telle que définie précédemment,
- au moins un accessoire de ventilation tel que défini précédemment,
dans laquelle chaque accessoire de ventilation est configuré pour être appairé à la station de mesure.

Selon un autre aspect, l'invention concerne une méthode de pilotage d'une installation de ventilation telle que décrite précédemment. La méthode de pilotage comprend :
- la fourniture d'une station de mesure et au moins un accessoire de ventilation,
- l'appairage de chaque accessoire de ventilation à la station de mesure, au moyen d'une unité électronique de contrôle de la station de mesure, de manière à déterminer la configuration globale de l'installation de ventilation, puis
- la détermination d'un scénario de ventilation préféré, au moyen de l'unité électronique de contrôle et en considérant la configuration globale, puis
- la mesure, au moyen d'au moins un capteur de mesure, d'au moins un paramètre de qualité de l'air, puis
- la détermination, en fonction de la ou des mesures du au moins un capteur de mesure et du scénario de ventilation préféré et au moyen de l'unité électronique de contrôle, d'un ou plusieurs ordres à transmettre à chaque accessoire de ventilation, chaque ordre étant associé à un accessoire de ventilation respectif, puis
- la transmission, à chaque accessoire de ventilation, de l'ordre associé à cet accessoire de ventilation, de sorte que l'accessoire de ventilation change d'état de fonctionnement.

Cette méthode de pilotage induit les mêmes avantages que ceux mentionnés ci-dessus au sujet de l'installation de ventilation de l'invention.

Avantageusement :
- La méthode de pilotage comprend, en outre, une étape d'initialisation, qui est antérieure à l'étape de détermination (503) et au cours de laquelle un ou plusieurs scénarii de ventilation sont transmis depuis un module mémoire du capteur vers la mémoire de l'unité de contrôle, tandis qu'au cours de l'étape de détermination, le scénario de ventilation préféré est choisi parmi le ou les scénarii de ventilation transmis au cours de l'étape d'initialisation.
- La méthode de pilotage comprend en outre :
   - L'envoi, à un serveur distant et au moyen d'une passerelle Internet de la station de mesure, de données relatives aux mesures de qualité de l'air et à la configuration globale, puis
   - la réception, en provenance du serveur distant, d'un scenario additionnel de ventilation, le scénario additionnel étant élaboré sur la base des données transmises par la station de mesure au serveur distant, puis
   - l'enregistrement du scénario additionnel dans la mémoire de l'unité électronique de contrôle, le scénario additionnel devenant le scénario de ventilation préféré.
- Le scénario additionnel de ventilation est élaboré en utilisant des méthodes d'apprentissage automatique.

L'invention sera mieux comprise, et d'autres avantages de celle-ci apparaîtront plus clairement à la lumière de la description qui va suivre, de plusieurs modes de réalisation d'une station de mesure, d'une installation de ventilation et d'une méthode de pilotage, conformes à son principe, donnée uniquement à titre d'exemple et faite en référence aux dessins annexés, dans lesquels :
- [Fig 1] la figure 1 représente respectivement, sur deux inserts a) et b), une installation de ventilation conforme à un premier mode de réalisation de l'invention, et une vue en perspective d'une station de mesure de l'installation de ventilation, la station de mesure étant elle aussi conforme à l'invention ;
- [Fig 2] la figure 2 représente respectivement, sur deux inserts a) et b), la station de mesure de la figure 1 a), certaines pièces étant cachées, et un éclaté de l'insert a) ;
- [Fig 3] la figure 3 est un graphe illustrant des effets d'une méthode de pilotage de l'installation de ventilation, la méthode de pilotage étant elle-aussi conforme à l"invention ;
- [Fig 4] la figure 4 représente respectivement, sur deux inserts a) et b), des installations de ventilation conformes à des modes de réalisation alternatifs de l'invention,
- [Fig 5] la figure 5 représente une installation de ventilation conforme à un autre mode de réalisation de l'invention,
- [Fig 6] la figure 6 représente une installation de ventilation conforme à un autre mode de réalisation de l'invention, l'installation de ventilation étant dans une première configuration de fonctionnement,
- [Fig 7] la figure 7 représente l'installation de ventilation de la figure 6, l'installation de ventilation étant dans une deuxième configuration de fonctionnement,
- [Fig 8] la figure 8 représente l'installation de ventilation de la figure 6, l'installation de ventilation étant dans une troisième configuration de fonctionnement
- [Fig 9] la figure 9 représente l'installation de ventilation de la figure 6, l'installation de ventilation étant dans une quatrième configuration de fonctionnement
- [Fig 10] la figure 10 représente, respectivement, sur deux inserts a) et b), des diagrammes synoptiques illustrant des méthodes de pilotage de l'invention.

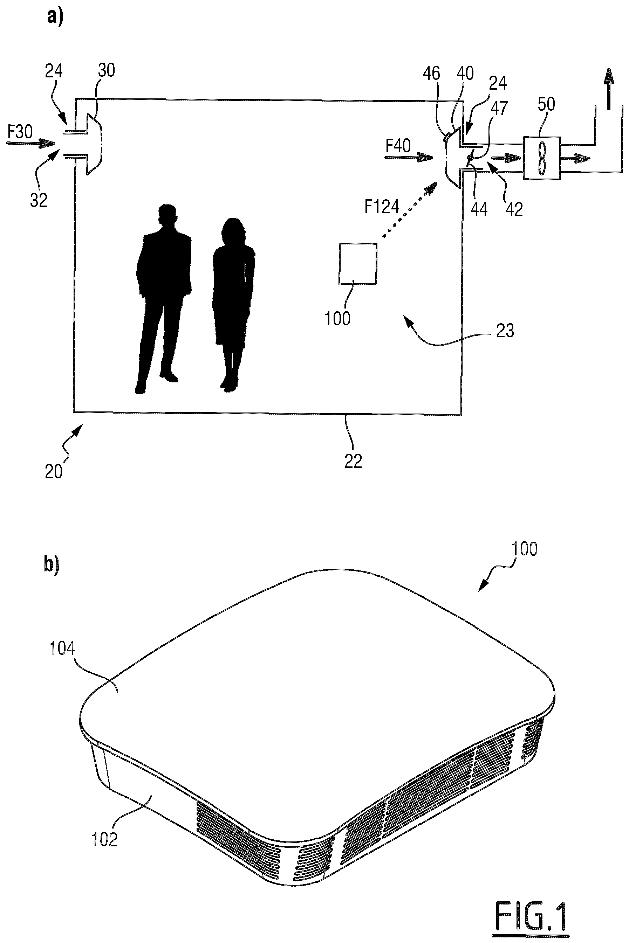

Une installation de ventilation 20, conforme à un premier mode de réalisation de l'invention, est représentée schématiquement à la figure 1 a). L'installation de ventilation 20, dite aussi simplement « installation 20 » dans la suite, comprend un local, qui est ici formé d'une seule pièce 22. La pièce 22 est prévue pour accueillir une ou plusieurs personnes.

La pièce 22 comprend au moins deux ouvertures 24, qui sont prévues pour la circulation de l'air. Ainsi l'installation 20 comprend une entrée d'air 30, qui est assujettie à une des ouvertures 24, et une bouche d'extraction 40, qui est assujettie à l'autre des ouvertures 24. L'entrée d'air 30 ménage un passage d'air 32, qui est configuré pour laisser passer un flux d'air entrant F30 au travers de l'entrée d'air 30. De manière similaire, la bouche d'extraction 40 ménage un passage d'air 42, qui est configuré pour laisser passer un flux d'air extrait F40 au travers de la bouche d'extraction 40.

Dans l'exemple illustré, la bouche d'extraction 40 est fluidiquement reliée à un caisson de ventilation 50, qui est configuré pour extraire le flux d'air extrait F40 de la pièce 22 et rejeter ce flux d'air extrait F40 à l'extérieur de la pièce 22. Par dépression dans la pièce 22, le flux d'air entrant F30 est introduit dans la pièce 22 à travers l'entrée d'air 30. L'installation 20 est ainsi une installation dite « simple flux ». On considère que le flux d'air entrant F30 est égal au flux d'air extrait F40, les éventuelles fuites étant négligées.

En variante non illustrée, les principes de l'invention sont aussi transposables à une installation double flux. Dans ce cas, l'entrée d'air 30 est une bouche d'insufflation, qui est fluidiquement reliée à un caisson de ventilation. Plus généralement, les bouches de ventilation incluent les entrées d'air, les bouches d'insufflation, ainsi que les bouches d'extraction.

Dans l'exemple illustré, la bouche d'extraction 40 comprend aussi un organe d'actionnement 44, ici un clapet pivotant, qui est mobile entre plusieurs positions, de manière à obturer plus ou moins le passage d'air 42 de la bouche d'extraction 40, influant ainsi sur le débit du flux d'air extrait F40 au travers du passage d'air 42 lorsque l'installation de ventilation 20 est en fonctionnement.

La bouche d'extraction 40 est un premier exemple d'accessoire de ventilation de l'installation de ventilation 20. Plus généralement, l'organe d'actionnement 44 est commutable entre plusieurs configurations, de manière à influer sur le débit d'air au travers du passage d'air 42 associé à l'accessoire de ventilation, ici la bouche d'extraction 40, chaque configuration de l'organe d'actionnement 44 étant associée à un état de fonctionnement de l'accessoire de ventilation. Comme décrit plus loin, la bouche d'extraction 40 est commandable à distance, de manière à ajuster la position de l'organe d'actionnement 44, autrement dit de manière à choisir l'état de fonctionnement de l'accessoire de ventilation.

L'installation de ventilation 20 comprend aussi une station de mesure 100. La station de mesure 100, dite aussi simplement « station 100 », est représentée isolément à la figure 1 b). Dans le premier mode de réalisation de l'invention, la station de mesure 100 est avantageusement fixée sur un mur 23 de la pièce 22, comme illustré à la figure 1 a), de sorte que la station de mesure 100 se trouve dans une zone de respiration, ou « *breathing zone* » en anglais, des personnes éventuellement présentes dans la pièce 22 afin de mesurer le plus précisément possible la pollution à laquelle sont soumis les personnes présentes dans le local 22. Schématiquement, la zone de respiration correspond à une hauteur comprise entre 90 cm et 180 cm au-dessus du sol.

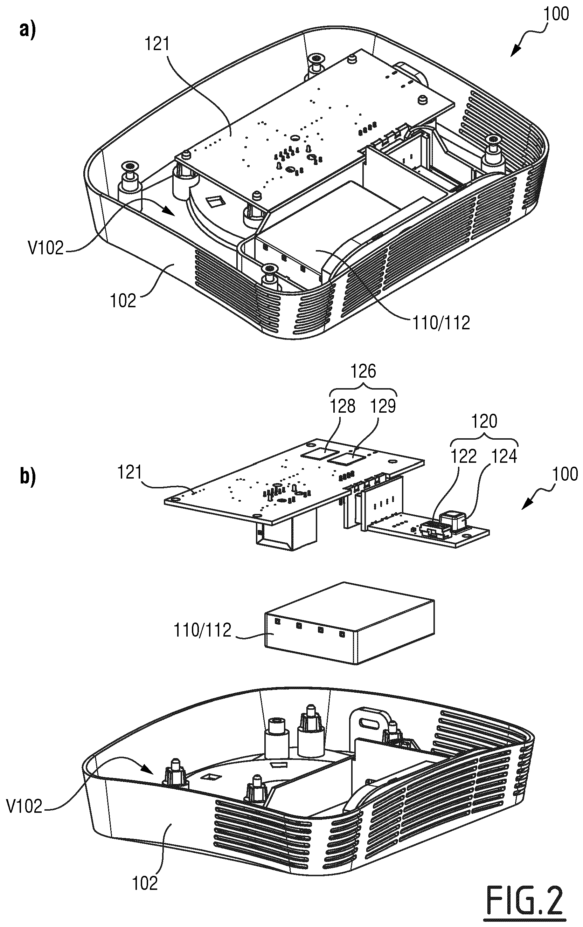

La station 100 comprend un boitier 102, qui ménage une cavité V102. Dans l'exemple non limitatif illustré, le boitier 102 inclut un capot 104, qui est fixé au reste du boitier 102 de manière à refermer la cavité V102. À la figure 2 a), le capot 104 est omis, pour révéler l'intérieur de la station 100.

La station de mesure 100 comprend au moins un capteur 110, chaque capteur 110 étant configuré pour mesurer un paramètre de qualité de l'air autour de la station de mesure 100. La qualité de l'air est notamment définie par la température et par divers polluants susceptibles de se retrouver dans l'air, soit en lien avec l'environnement intérieur ou extérieur de la pièce 22, soit en lien avec l'activité des personnes dans la pièce 22.

Dans le premier mode de réalisation, le capteur 110 est reçu dans le boitier 102 de la station de ventilation 100, aussi le capteur 110 est dit « capteur intégré ». En variante, décrite plus loin dans la présente description, le capteur est situé à l'extérieur et à distance du boitier 102, un tel capteur étant dit « capteur déporté ».

De préférence, la station de mesure 100 comprend un module de mesure 112, qui est reçu dans le boitier 102 de la station de mesure et qui inclut le au moins un capteur 110. Autrement dit, le au moins un capteur 110 est un capteur intégré et fait partie du module de mesure 112.

Le module de mesure 112 est avantageusement interchangeable, c'est-à-dire que le module de mesure 112 est prévu pour être remplacé, par exemple en cas de dysfonctionnement du au moins un capteur 110, ou bien pour remplacer un module de mesure d'un premier type, c'est-à-dire comprenant un ou plusieurs capteurs d'un type prédéterminé, par un module de mesure d'un deuxième type, c'est-à-dire comprenant un ou des capteurs de mesure différents des capteurs du module de mesure du premier type. De préférence, la station de mesure 100 comprend au moins deux capteurs 110. De préférence, les au moins deux capteurs 110 incluent un capteur de température et un capteur d'humidité. Autrement dit, le au moins un capteur 110 inclut préférentiellement un capteur de température et un capteur d'humidité.

Avantageusement, le au moins un capteur 110 inclut, en outre, au moins un capteur additionnel choisi parmi un capteur de CO₂ - dioxyde de carbone -, un capteur de particules - désignées par PM pour « *Particulate Matter* » en anglais -, un capteur de composés organiques volatils - désignés par l'acronyme COV, ou VOC en anglais -, un capteur de NOx - oxydes d'azote -, un capteur de SOx - oxydes de soufre -, et un capteur de formaldéhyde.

Ainsi, selon une première configuration préférée, la station de mesure 100 comprend trois capteurs 110, incluant un capteur de température, un capteur d'humidité, et un capteur de CO₂. À titre d'illustration, cette première configuration couvre l'essentiel des polluants susceptibles d'être dégagés dans une salle de classe et ayant un impact sur la qualité de l'air. Selon une deuxième configuration préférée, la station de mesure 110 comprend trois capteurs 110, incluant un capteur de température, un capteur d'humidité, et un capteur de particules PM. À titre d'illustration, cette deuxième configuration couvre l'essentiel des polluants susceptibles d'être dégagés dans un logement.

La station de mesure 100 comprend aussi des moyens de communication 120. Dans l'exemple illustré, la station de mesure 100 comprend une carte électronique 121, qui est reçue dans le volume interne V102 du boitier 102. La carte électronique 121, qui est schématiquement représentée, comprend plusieurs composants électroniques qui sont représentés schématiquement et de manière non limitative. Ainsi dans l'exemple illustré à la figure 2 b), les moyens de communication 120 sont schématiquement représentés par des composants de la carte électronique 121.

Les moyens de communication 120 incluent des moyens de réception 122, qui sont configurés pour recevoir des informations de configuration relatives au type de chaque accessoire de ventilation et au nombre d'accessoires de ventilations de chaque type, de manière à appairer chaque accessoire de ventilation à la station de mesure, l'ensemble des informations de configuration reçues formant une configuration globale de l'installation de ventilation.

Les moyens de réception 122 sont avantageusement des moyens de réception sans fil, de préférence à ondes électromagnétiques. De préférence, les moyens de réception 122 sont aptes à échanger des informations avec un smartphone, par exemple selon un protocole Bluetooth ou WiFi, pour la réception des informations de configuration.

Plusieurs protocoles de communications, non limitatifs, sont considérés dans la présente description. Selon un premier exemple, le protocole Bluetooth est défini par la norme IEEE 802.15.1:2005 et ses évolutions ultérieures. Par exemple, un réseau Bluetooth maillé, ou *mesh network* en anglais, est également défini par la norme IEEE 802.15.4:2009. Les variantes connues sous les noms BLE, LoRa(WAN) ou ZigBee, sont définies par la norme IEEE 802.15.4:2020. Selon un deuxième exemple, le protocole WiFi est défini par la norme IEEE 802.11:2016 et ses révisions ou évolutions ultérieures. Selon un troisième exemple, la norme ISO 14443, qui inclut quatre parties ISO/IEC 14443-1:2018, ISO/IEC 14443-2:2020, ISO/IEC 14443-3:2018 et ISO/IEC 14443-4:2018, définit les protocoles de communication utilisés par les cartes sans contact. Le protocole NFC - de l'anglais *Near Field Communication,* ou communication en champ proche - est un standard basé sur la norme ISO 14443 et la norme JIS x6349-4 FeLiCa, cette dernière étant couverte par la norme ISO/IEC 15693-3:2019.

Chaque accessoire de ventilation, ici la bouche d'extraction 40, comprend un identifiant unique 46, qui est associé de manière univoque au type de l'accessoire de ventilation considéré. Chaque identifiant unique 46 est prévu pour l'appairage de l'accessoire de ventilation à la station de mesure 100.

L'identifiant unique 46 est lisible au moyen d'un appareil électronique tel qu'un smartphone. Le smartphone, qui n'est pas représenté, comprend généralement une caméra, et est apte à communiquer selon divers protocoles, en particulier selon un ou plusieurs protocoles choisis parmi les protocoles Bluetooth, Wifi, NFC.

Dans l'exemple illustré, l'identifiant unique 46 est un code optique, de préférence un code QR - ou QR code en anglais -, qui est lisible au moyen d'une caméra équipant le smartphone. Alternativement ou en complément, l'identifiant unique 46 est un identifiant à radiofréquence, dit aussi RFID pour *Radio Frequency IDdentification* en anglais, avantageusement une puce NFC, qui est lisible au moyen d'un smartphone.

Ainsi, selon un scenario lors de la mise en place de l'installation de ventilation 20, l'installateur lit, au moyen de son smartphone, l'identifiant unique 46 dont est pourvu chaque accessoire de ventilation, ici la bouche d'extraction 40, puis transmet les informations correspondantes à la station de mesure 100, par l'intermédiaire des moyens de réception 122. En résultat, chaque accessoire de ventilation est appairé à la station de mesure 100.

Les moyens de communication 120 incluent des moyens de transmission 124, qui sont configurés pour transmettre à chaque accessoire de ventilation, préalablement appairé à la station de mesure 100, des ordres relatifs à des états de fonctionnement de l'accessoire de ventilation considéré. En corolaire, chaque accessoire de ventilation, ici la bouche d'extraction 40, comprend des moyens complémentaires de transmission 47, les moyens complémentaires de transmission 47 étant sont configurés pour coopérer avec les moyens de transmission 124 de la station de mesure 100 de sorte que, une fois que l'accessoire de ventilation est appairé à la station de mesure 100, l'accessoire de ventilation est apte à recevoir des ordres en provenance de la station de mesure et apte à basculer entre les états de fonctionnements de l'accessoire de ventilation considéré.

Les moyens de transmission 124 - et les moyens complémentaires de transmission 47 - sont des moyens de communication sans fil, qui fonctionnent de préférence selon un protocole de communication choisi dans une liste incluant les protocoles Bluetooth, Zigbee, LoRa, LoRaWAN, etc.

Autrement dit, une fois que chaque accessoire de ventilation est appairé à la station de mesure 100, la station de mesure 100 est apte à envoyer à chaque accessoire de ventilation, des ordres relatifs à des états de fonctionnement de l'accessoire de ventilation considéré. Autrement dit, dans l'exemple illustré, la station de mesure 100 est apte à contrôler, à distance, la position de l'organe d'actionnement 44. Dans l'exemple de la figure 1 a), la transmission des ordres de la station de mesure 100 à la bouche d'extraction 40 est représentée par une flèche F124 en pointillés.

La station de mesure 100 comprend aussi une unité électronique de contrôle 126. L'unité électronique de contrôle 126 est représentée schématiquement par des composants de la carte électronique 121. L'unité électronique de contrôle 126, dite aussi simplement « unité de contrôle » ou ECU en anglais, comprend une unité de calcul 128 et une mémoire 129. L'unité de contrôle 126 est configurée pour déterminer, en fonction de la configuration globale, un scénario de ventilation préféré. De manière non limitative, le scénario de ventilation préféré dépend de la configuration globale de l'installation de ventilation 20, du nombre et du type des capteurs 110...

À titre d'exemple illustratif correspondant à un cas simple, un unique scénario de ventilation, préalablement enregistré dans la mémoire 129 de l'unité électronique de contrôle 126, est disponible, auquel cas cet unique scénario de ventilation est naturellement le scénario de ventilation préféré.

Alternativement, lorsque plusieurs scénarii de ventilation sont préalablement enregistrés dans la mémoire 129 de l'unité électronique de contrôle 126, le scénario de ventilation préféré est choisi parmi ces plusieurs scénarii de ventilation, notamment en fonction de la configuration globale de l'installation de ventilation 20.

Avantageusement, il est possible de mettre à jour le scénario préféré, en fonction de l'historique des mesures enregistré dans la mémoire 129 de l'unité électronique de contrôle 126. À cet effet, les moyens de communication 120 incluent une passerelle Internet, la station de mesure 100 étant configurée pour échanger des données avec un serveur distant. La passerelle internet comprend par exemple des moyens de connexion WiFi, configurés pour se connecter à un routeur wifi domestique. Par « serveur distant », on comprend à la fois un serveur physique, et/ou un serveur virtuel, faisant partir notamment d'un réseau distant, ou « cloud ». Ainsi le serveur distant possède des capacités de calcul et de mémoire bien supérieures à celles de la station de mesure 100. Le serveur distant, qui n'est pas représenté, ne fait pas partie de l'invention mais sert à en expliquer le fonctionnement.

La station de mesure 100 est ainsi configurée pour envoyer au serveur distant des données relatives aux mesures de qualité de l'air et à la configuration globale. Le serveur distant reçoit des données historiques relatives aux valeurs mesurées relatives à la qualité de l'air, des données relatives aux ordres envoyés par la station de mesure 100 aux accessoires de ventilations, et des données relatives à l'évolution de la qualité de l'air suite à la mise en œuvre de ces ordres par les accessoires de ventilation. Sur la base des données historiques transmises au serveur distant, le serveur distant est apte à élaborer un scenario additionnel, de manière à optimiser la qualité de l'air. De préférence, le scenario additionnel est élaboré en utilisant des méthodes d'apprentissage automatiques - dites « *deep learning* » en anglais -.

À titre d'exemple illustratif, si le serveur distant constate, sur la base de l'historique des mesures envoyé par la station de mesure 100, que la pollution est générée quotidiennement dans un intervalle de temps proche et que les seuils sont dépassés systématiquement, alors, selon le scénario additionnel élaboré par le serveur distant, la station de mesure 100 est configurée pour mettre en place une ventilation préventive de manière à réduire ce pic de pollution et éviter - ou du moins réduire - le dépassement du seuil. Avantageusement, la station de mesure 100 est configurée pour mesurer l'évolution de la pollution et, en fonction, pour déterminer au mieux le moment le plus opportun de mise en place de la ventilation préventive.

La station de mesure 100 est configurée pour recevoir en provenance du serveur distant un scenario additionnel de ventilation et pour enregistrer le scénario additionnel dans la mémoire 129 de l'unité électronique de contrôle 126, le scénario additionnel devenant le scénario de ventilation préféré.

L'unité de contrôle 126 est également configurée pour recevoir des valeurs mesurées par chaque capteur de mesure 110 et pour déterminer, en fonction des valeurs reçues et du scénario de ventilation préféré, les ordres à envoyer à chaque accessoire de ventilation.

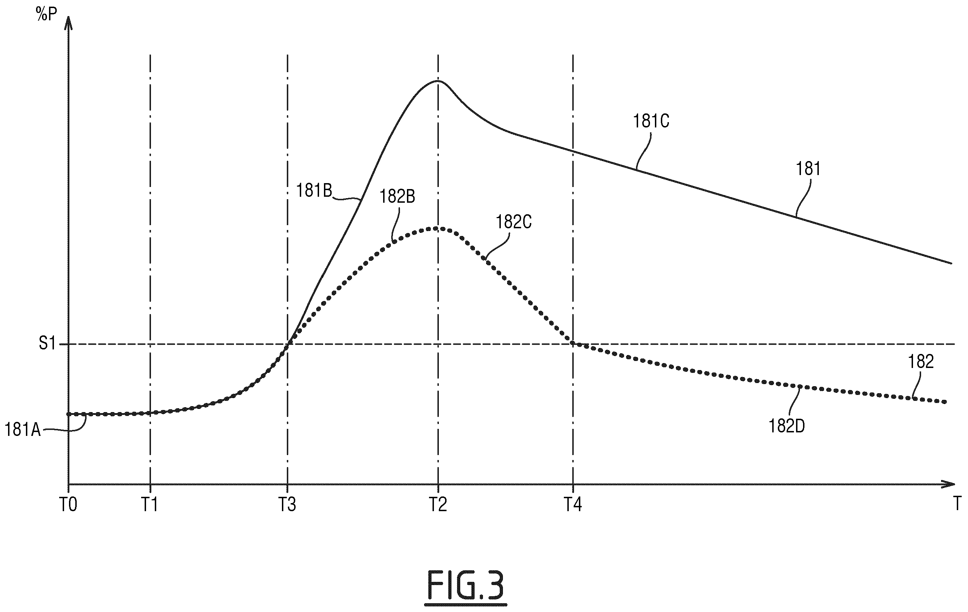

La figure 3 est un graphe 180 illustrant des effets de l'invention pour l'amélioration de la qualité de l'air de l'installation 20. La figure 3 comprend une première courbe 181, qui représente l'évolution, en fonction du temps T, d'une concentration %P d'un polluant P au sein de la pièce 22 lorsque l'invention n'est pas mise en œuvre, et une deuxième courbe 182, qui représente l'évolution de la concentration %P du même polluant P lorsque l'invention est mise en œuvre. Par exemple, le polluant P considéré est le CO₂, dégagé par l'activité des personnes lorsque ces personnes sont présentes dans la pièce 22.

Lorsque l'invention n'est pas mise en œuvre, l'actionneur 44 est considéré comme immobile, et les flux d'air entrant F30 et extrait F40 sont chacun à un débit dit « nominal ». Le débit nominal est généralement défini par les normes de ventilation des bâtiments. Par exemple, en France, la norme NF DTU 68.3 d'avril 2017, issue de l'arrêté de mars 1982, est applicable aux systèmes autoréglables, tandis que pour les systèmes hygroréglables, on considère l'Arrêté d'octobre 1983, associé aux documents CPT3828 et 3827 - version 6 de juillet 2024.

Dans l'exemple illustré, l'installation de ventilation 20 est autoréglable, aussi le débit nominal est considéré comme constant. Dans le cas, non illustré, où l'installation de ventilation est hygroréglable, le débit nominal varie automatiquement en fonction de l'humidité de l'air.

La concentration %P en polluant P est mesurée périodiquement à l'aide du capteur 110, par exemple chaque seconde. La première courbe 181 présente, entre un instant initial T0 et un premier instant T1, une première portion 181A, qui est horizontale et qui correspond à un intervalle de temps pendant lequel le polluant P considéré présente une concentration stable, correspondant par exemple à la concentration atmosphérique à l'extérieur du local 22.

À partir du premier instant T1, et jusqu'à un deuxième instant T2, la concentration en polluant P augmente dans le local 22. Par exemple, une ou plusieurs personnes sont présentes dans le local, dégageant du CO₂. En conséquence, la première courbe présente, entre le premier instant T1 et le deuxième instant T2, une deuxième portion 181B qui est croissante et atteint un maximum à l'instant T2. En particulier, la concentration %P de polluant P dépasse un premier seuil S1 de polluant à un troisième instant T3. Le troisième instant T3 est intermédiaire entre le premier instant T1 et le deuxième instant T2. Le seuil S1 est un seuil prédéterminé correspondant par exemple à un seuil de confort.

À partir de l'instant T2, le local 22 n'est plus occupé. Les flux d'air entrant F30 et extrait F40, toujours au niveau nominal, diluent progressivement la concentration de polluant %P dans l'air de la pièce 22. Ainsi, à partir de l'instant T2, la première courbe 181 présente une portion décroissante, qui reste cependant supérieure au premier seuil S1.

On décrit à présent les avantages de l'invention à l'aide de la deuxième courbe 182.

Entre l'instant initial T0 et le troisième instant T3, la deuxième courbe 182 comprend une première portion 182A qui est superposée à la première courbe 181.

À partir du troisième instant T3, la station de mesure 100 détecte que la concentration en polluant P dépasse le premier seuil et commande la bouche d'extraction 40 pour augmenter le débit d'air extrait F40 au-delà de la valeur nominale, par exemple à une valeur maximale, et ce en commandant l'organe d'actionnement 44 par l'intermédiaire des moyens de transmission 124. Par compensation, le débit d'air entrant F40 augmente également.

Ainsi, entre le troisième instant T3 et le deuxième instant T2, la concentration en polluant P continue d'augmenter, mais dans une proportion moindre que dans le cas où les débits entrant F30 et extrait F40 sont maintenus au niveau nominal. La deuxième courbe 182 présente ainsi, entre le troisième instant T3 et le deuxième instant T2, une deuxième portion 182B croissante.

À partir du deuxième instant T2, la génération de polluant P dans le local 22 cesse, mais la concentration en polluant P restant supérieure au premier seuil S1, le débit d'air extrait F40 est maintenu au-delà de la valeur nominale, en particulier à la valeur maximale, de manière à faire décroitre la concentration de polluant %P le plus rapidement possible. Dans l'exemple de la figure 3, la concentration de polluant %P repasse sous le premier seuil S1 à partir d'un quatrième instant T4, qui est postérieur au deuxième instant T2. La deuxième courbe 182 comprend une troisième portion 182C, qui s'étend entre le deuxième instant T2 et le quatrième instant T4 et qui illustre la décroissance de la concentration en polluant %P alors que le débit d'air extrait F40 est maintenu à la valeur maximale.

À partir du quatrième instant T4, la station de mesure 100 détecte que la concentration en polluant %P est inférieure au premier seuil S1 et commande la bouche d'extraction 40 pour remettre le débit d'air extrait F40 à la valeur nominale, et ce en commandant l'organe d'actionnement 44 par l'intermédiaire des moyens de transmission 124. La concentration en polluant %P continue de décroitre, tendant à converger vers la concentration atmosphérique à l'extérieur du local 22.

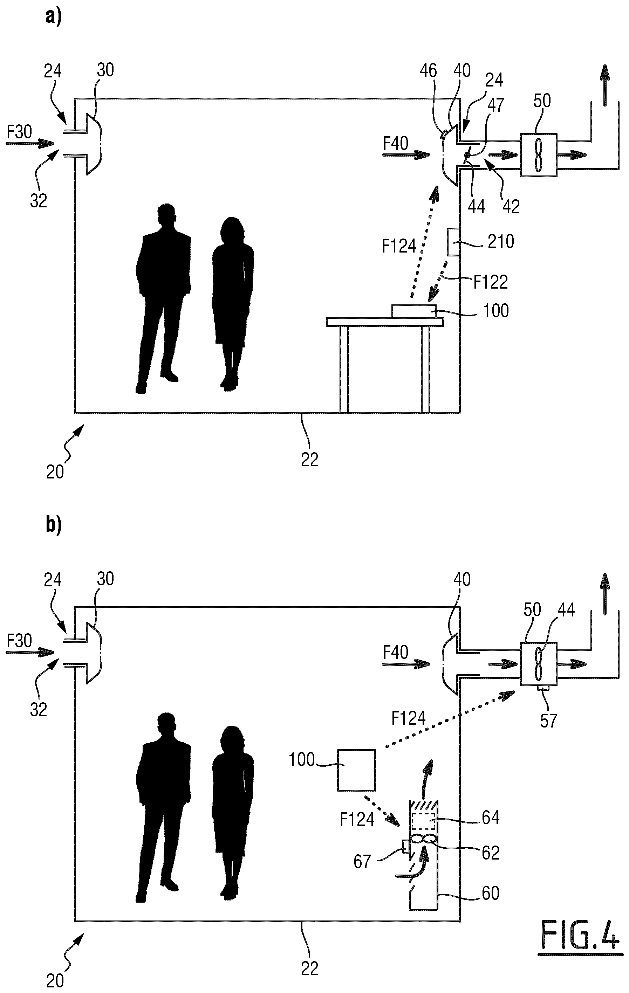

Des modes de réalisation alternatifs de l'invention sont illustrés aux figures 4 à 9.

Dans les modes de réalisation alternatifs de l'invention, les éléments analogues à ceux des autres modes de réalisation portent les mêmes références et fonctionnent de la même façon. Dans ce qui suit, on décrit principalement les différences entre chaque mode de réalisation et le ou les précédents.

Si une référence est mentionnée dans la description sans être portée sur une figure ou portée sur une figure sans être mentionnée dans la description, elle désigne le même élément que celui portant la même référence dans le premier mode de réalisation.

Un deuxième mode de réalisation de l'invention est représenté en figure 4 a). Une des principales différences du deuxième mode de réalisation avec le premier mode est que dans le deuxième mode, la station de mesure 100 comprend un capteur 210 qui est situé à l'extérieur du boitier 102. Autrement dit, le capteur 210 est un capteur déporté.

Dans l'exemple illustré, le capteur 210 est fixé sur un mur de la pièce 22, dans la zone de respiration, tandis que le boitier 102 est ici représenté posé sur une table. Les moyens de réception 122 sont avantageusement configurés pour la réception des valeurs mesurées par le capteur 210 déporté, la communication entre le capteur déporté 210 et le reste de la station de mesure 100 étant représenté par une flèche F122. De préférence, le capteur déporté est compatible avec les moyens de réception 122, c'est-à-dire la station de mesure 100 communique avec le capteur déporté 210 selon les mêmes protocoles de communication que ceux utilisés pour l'appairage de la station de mesure 100 avec les accessoires de ventilations, soit notamment Bluetooth, BLE, LoRa(WAN), ZigBee, etc.

De préférence, lorsque le capteur déporté communique avec la station de mesure pour lui transmettre les valeurs de mesures, le message transmis contient une indication relative à l'emplacement du capteur, en particulier lorsque le capteur déporté est situé à l'extérieur du local.

En variante non représentée, la station de mesure comprend au moins un capteur 110 intégré, comme dans le premier mode de réalisation de l'invention, et un capteur 210 déporté, qui permet de compléter les mesures effectuées par le au moins un capteur 110 intégré.

Il est ainsi possible de placer le capteur déporté 210 selon les besoins, par exemple dans une autre pièce 22, voire à l'extérieur du local 22, par exemple pour surveiller la concentration en particules, SOx ou NOx dans l'air atmosphérique à l'extérieur du local 22 et limiter l'augmentation du débit entrant si la concentration extérieure est trop élevée.

Selon une variante non représentée, le capteur déporté est intégré à l'accessoire de ventilation, comme la bouche d'extraction 40. Selon une autre variante non représentée, le capteur déporté est intégré à l'entrée d'air 30. Il est ainsi possible de surveiller la qualité de l'air extérieur, sans pour autant placer un capteur à l'extérieur du local.

Un troisième mode de réalisation de l'invention est représenté à la figure 4 b). Une des principales différences du troisième mode de réalisation avec les modes de réalisation précédents est que dans le troisième mode, l'organe d'actionnement 44 est ici un variateur de vitesse du caisson de ventilation 50, tandis que la bouche d'extraction 40 n'est ici pas pilotable par la station de mesure 100.

Le caisson de ventilation 50 comprend ainsi un identifiant unique 57, qui est associé de manière univoque au caisson de ventilation 50 et qui est prévu pour l'appairage du caisson de ventilation 50 à la station de mesure 100. Autrement dit, le caisson de ventilation 50 est ici un exemple d'accessoire de ventilation, susceptible de recevoir des ordres de la station de mesure 100.

En variante non représentée, la bouche d'extraction 40 et le caisson de ventilation 50 comprennent chacun un organe d'actionnement 44 propre et sont chacun pilotables, sélectivement ou conjointement, par la station de mesure 100.

Dans l'exemple illustré, l'installation de ventilation 20 comprend aussi un purificateur d'air 60. Le purificateur d'air 60, qui comprend un ventilateur 62 et un filtre 64, est configuré pour filtrer l'air présent dans le local 22. Lorsque la station de mesure 100 détecte que certains polluants, susceptibles d'être filtrés par le purificateur d'air 60, sont en concentration trop importante dans le local 22, alors la station de mesure 100 commande la mise en marche du purificateur d'air 60. Le purificateur d'air 60 comprend un identifiant unique 67, qui est associé de manière univoque au purificateur d'air 60 et qui est prévu pour l'appairage du purificateur d'air 60 à la station de mesure. Le purificateur d'air 60 est un autre exemple d'accessoire de ventilation de l'installation de ventilation 20.

Plus généralement, l'installation de ventilation comprend au moins un accessoire de ventilation, chaque accessoire de ventilation est choisi dans une liste incluant les entrées d'air, les bouches d'insufflation, les sorties d'air, les bouches d'extraction, les purificateurs d'air, etc.

Selon une autre variante non représentée, l'accessoire de ventilation est un registre motorisé, l'organe de régulation étant un clapet motorisé. Le registre motorisé est par exemple localisé directement dans un conduit, ou bien sur une entrée d'un caisson de ventilation, selon une installation dite « en piquage ».

Dans l'exemple, le au moins un capteur 110 de la station de mesure 100 inclut un capteur de particules, tandis que le filtre 64 est un filtre à particules. Alternativement, le au moins un capteur 110 de la station de mesure 100 inclut un capteur de COV, tandis que le filtre 64 est un filtre à COV, de préférence associé à un filtre à particules.

Plus généralement, on comprend que plusieurs stratégies de purification de l'air intérieur du local 22 sont possibles, en fonction du nombre, de la nature et de l'emplacement des capteurs 110 de mesure - intégrés ou déportés - dont est équipée la station de mesure 100, et en fonction des accessoires de ventilation de l'installation de ventilation 20.

Dans l'exemple de la figure 4 a), la station de mesure 100 est avantageusement équipée d'au moins deux capteurs 110, incluant un capteur d'humidité et un capteur de particules. Lorsque l'humidité dépasse un seuil de confort, mais que la concentration en particules reste en deçà d'un seuil limite associé, alors la station de mesure 100 commande seulement le caisson de ventilation 50, de manière à augmenter le débit d'air extrait F40, sans démarrer le purificateur d'air 60, de manière à contenir la consommation énergétique.

À l'inverse lorsque la concentration en particules dépasse seuil limite associé, mais que l'humidité reste en deçà du seuil de confort associé, alors la station de mesure 100 commande la mise en route du purificateur d'air 60, de manière à purifier l'air intérieur du local 22, sans augmenter le débit d'air extrait F40, notamment lorsque l'air extérieur est trop froid - en hiver -, trop pollué - aux heures de pointes de circulation automobile -, etc.

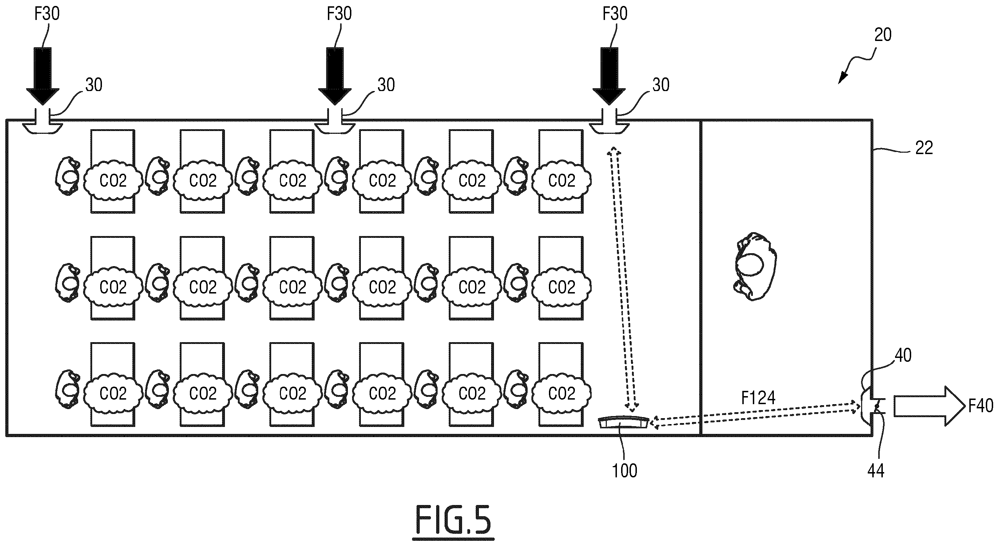

Un autre mode de réalisation de l'invention est représenté en figure 5.

Le local 22 est ici une salle de classe, le au moins un capteur de la station de mesure 100 incluant un capteur de CO₂. L'installation de ventilation 20 comprend ici trois entrées d'air 30, et une seule bouche d'extraction 40. Comme dans le premier mode de réalisation, la bouche d'extraction 50 comprend ici l'organe d'actionnement 44. Lorsque que les étudiants sont présents en nombre dans le local 22, une concentration en CO₂ tend à augmenter rapidement.

Il est connu de placer un capteur de CO₂ dans une gaine d'extraction de ventilation, par au niveau de la bouche d'extraction 40. Or les bouches de ventilation sont généralement placées au voisinage du plafond, alors que le CO₂ étant relativement lourd par rapport à l'air, en particulier par rapport au diazote ou au dioxygène. Aussi la concentration mesurée au niveau de la bouche d'extraction 40 est en fait inférieure à la concentration réellement existante dans la zone de respiration. Le fait que la station de mesure 110, qui inclut le capteur 110 de CO₂, soit placée dans la zone de respiration permet de mesurer la concentration à laquelle sont exposées les personnes présente dans le local 22, améliorant le confort global de ces personnes. En variante non représentée, le capteur de CO₂ est un capteur déporté, comme décrit précédemment en référence au deuxième mode de réalisation de l'invention.

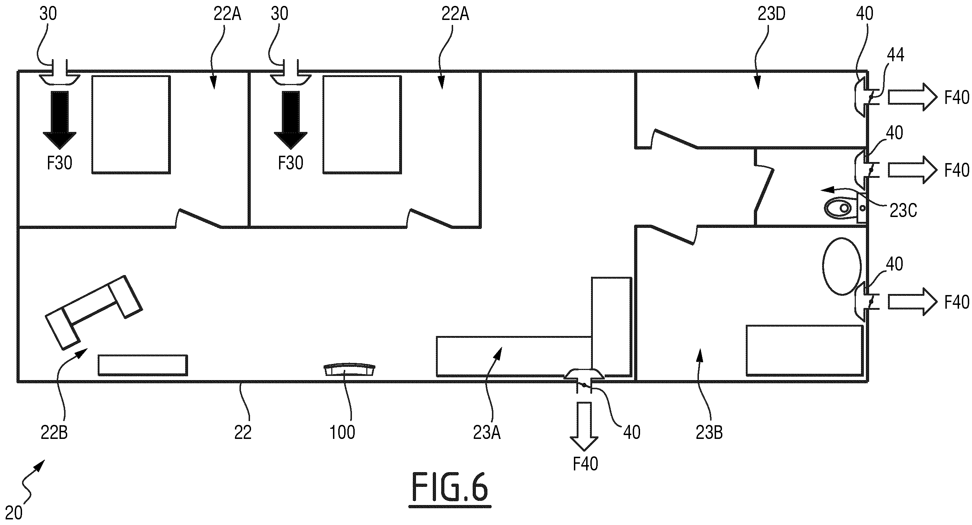

Un autre mode de réalisation de l'invention est décrit en référence aux figures 6 à 9. Le local 22 est ici un appartement, qui comprend des pièces de vie, ici deux chambres 22A et un salon 22B, et des pièces techniques, qui incluent ici une cuisine 23A, une salle de bain 23B, un cabinet de toilette 23C, une buanderie 23D. On comprend que selon l'activité des personnes présente dans l'appartement, par exemple sieste, cuisine, douche, etc., divers types de polluants sont principalement dégagés dans l'air intérieur du local 22, par exemple CO₂, particules ou COV, humidité, etc. Chaque type de polluant est respectivement associé à un seuil de confort.

Chaque chambre 22A est avantageusement équipée d'un exemplaire de l'entrée d'air 30. Chaque entrée d'air 30 est analogue, voire identique, à l'entrée d'air 30 décrite dans le premier mode de réalisation de l'invention. Chaque pièce technique 23A à 23D est ici équipée d'un exemplaire de la bouche d'extraction 40. Chaque bouche d'extraction 40 est analogue, voire identique, à la bouche d'extraction 40 décrite dans le premier mode de réalisation de l'invention. L'installation 20 comprend un exemplaire de la station de mesure 100, qui est ici fixée sur un mur du local 22, de préférence à une hauteur correspondant à la zone de respiration.

Dans l'exemple illustré, la station de mesure 100 est située entre la cuisine 23A et le salon 22B. La station de mesure 100 est équipée d'au moins un capteur, chaque capteur étant configuré pour mesurer un paramètre de qualité de l'air autour de la station de mesure 100. Chaque capteur est ici un capteur intégré et n'est pas représenté.

Le au moins un capteur inclut ici un capteur de CO₂, un capteur d'humidité relative, et un capteur de particules / COV. Optionnellement, le au moins un capteur inclut aussi un capteur de température.

Lors de la mise en place de l'installation 20, chaque accessoire de ventilation, ici chaque bouche d'extraction 40, est appairé à la station de mesure 100. Dans l'exemple illustré, un installateur lit, au moyen d'un smartphone, l'identifiant unique associé à chaque bouche d'extraction 40, et transmet chaque identifiant à la station de mesure 100, par l'intermédiaire des moyens de réception 124. En résultat, la station de mesure 100 dispose de toutes les informations nécessaires relatives à l'installation de ventilation 20, notamment le nombre et la nature de chaque accessoire de ventilation. Dans l'exemple illustré, la station de mesure 100 a ainsi enregistré le fait que l'installation de ventilation comprend une première bouche d'extraction 40 pour la cuisine 23A, une deuxième bouche d'extraction 40 pour la salle de bain 23B. une troisième bouche d'extraction 40 pour le cabinet de toilette 23C, et une quatrième bouche d'extraction 40 pour la buanderie 23D. Autrement dit, grâce à l'appairage de chaque accessoire de ventilation, la station de mesure 100 détermine la configuration globale de l'installation de ventilation.

À la figure 6, l'installation de ventilation 20 est représentée dans une première configuration, qui est une configuration d'attente, par exemple lorsqu'aucune personne n'est présente dans le local 22. Les débits des flux d'air entrants F30 ou extraits F40 sont généralement à une valeur nominale.

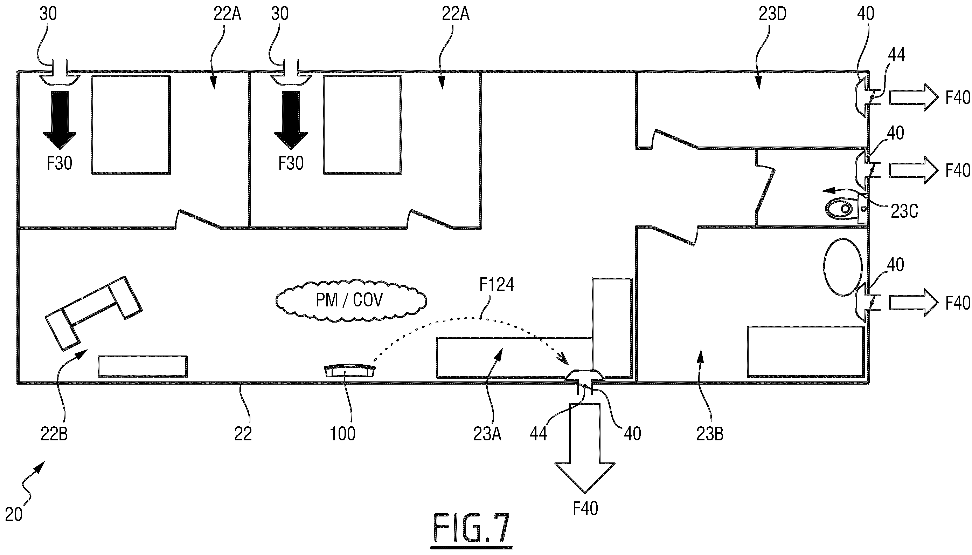

À la figure 7, l'installation de ventilation 20 est représentée dans une deuxième configuration, qui correspond par exemple au cas où les occupants font de la cuisine, libérant des particules - PM - dans le local 22. La station de mesure 100 détecte, au moyen du capteur de particules, l'augmentation de la concentration en particules dans l'air du local 22. Lorsque la concentration en particules dépasse un seuil de confort prédéterminé associé aux particules, la station de mesure 100 transmet à la bouche d'extraction 40 associée à la cuisine 23A un ordre F124, cet ordre consistant ici à augmenter l'ouverture de l'organe d'actionnement 44 correspondant, de manière à augmenter le flux d'air extrait F40 à travers la bouche d'extraction 40 de la cuisine 23A et ainsi réduire la teneur en particules de l'air à l'intérieur du local 22. En corolaire, le flux d'air entrant global, égal à la somme des flux d'air entrant F30 passant par chacune des entrées d'air 30, augmente.

La teneur en particule est mesurée de manière périodique, par exemple toutes les secondes. Une fois que la teneur mesurée repasse en deçà du seuil de confort associé aux particules, la station de mesure transmet à la bouche d'extraction 40 associée à la cuisine 23A un ordre, consistant à retourner à l'état initial.

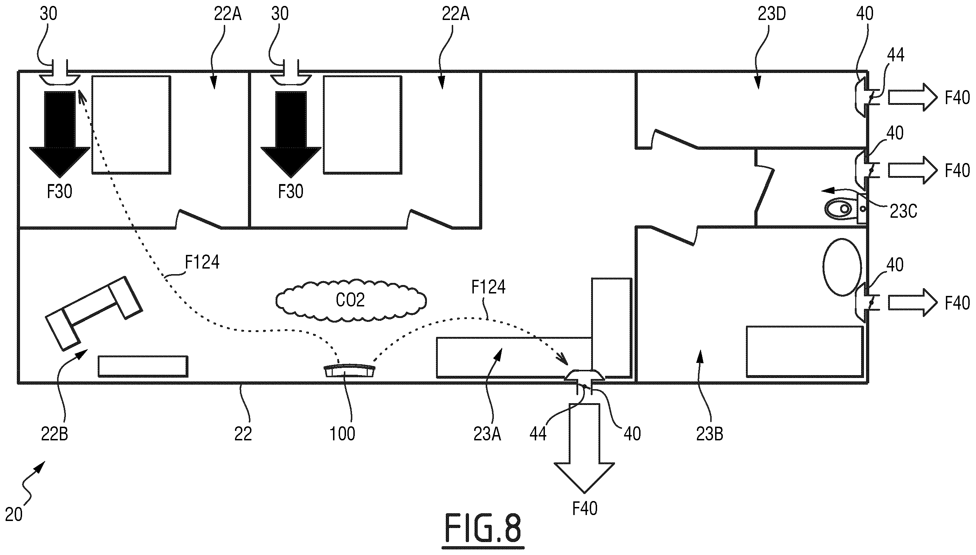

À la figure 8, l'installation de ventilation 20 est représentée dans une troisième configuration, qui correspond par exemple au cas où plusieurs occupants sont présents dans la chambre et/ou dans le salon, libérant du CO₂ dans le local 22. La station de mesure 100 détecte, au moyen du capteur de CO₂, l'augmentation de la concentration en CO₂ dans l'air du local 22. Lorsque la concentration en particules dépasse un seuil de confort prédéterminé associé au CO₂, la station de mesure 100 transmet à au moins une des bouches d'extraction 40, ici la bouche d'extraction 40 associée à la cuisine 23A un ordre F124, de manière à augmenter le flux d'air extrait F40 à travers la bouche d'extraction 40 de la cuisine 23A et ainsi réduire la teneur en particules de l'air à l'intérieur du local 22. En corolaire, le flux d'air entrant global, égal à la somme des flux d'air entrant F30 passant par chacune des entrées d'air 30, augmente, ce qui contribue à entrainer le CO₂ libéré par les occupants des chambres 22A, par exemple pendant la nuit.

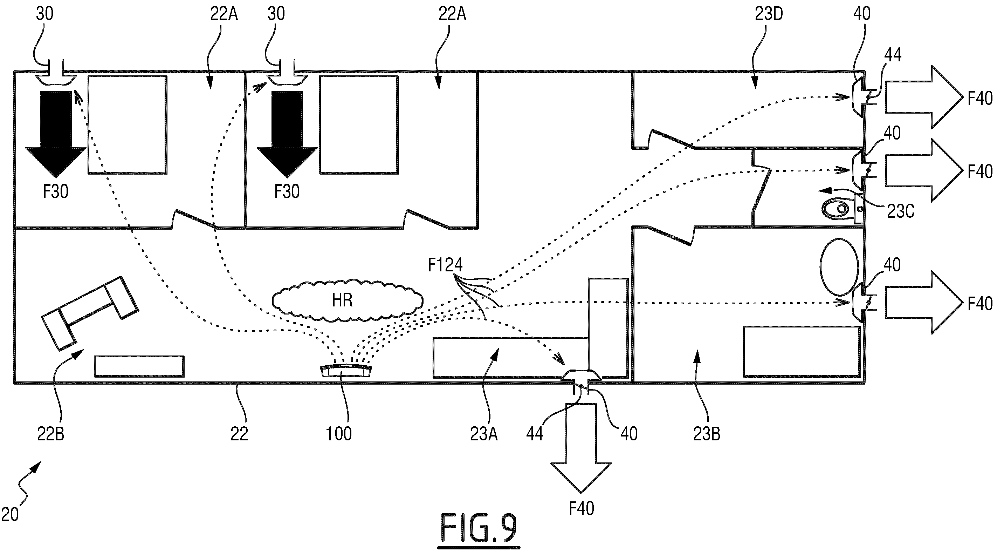

À la figure 9, l'installation de ventilation 20 est représentée dans une quatrième configuration, qui correspond au cas où une grande quantité d'humidité est libérée dans le local 22, augmentant l'humidité relative - notée HR - dans le local 22. Par exemple, certains occupants prennent des douches, d'autres étendent du linge ou utilisent un sèche-linge, d'autres font de la cuisine... La station de mesure 100 détecte, au moyen du capteur d'humidité, les variations de l'humidité relative dans l'air du local 22. Lorsque le taux d'humidité relative dépasse un seuil de confort prédéterminé, la station de mesure 100 transmet à au moins une des bouches d'extraction 40 un ordre F124, de manière à augmenter le flux d'air extrait F40. Dans l'exemple illustré, la station de mesure 100 transmet conjointement à chacune des bouches d'extractions 40 un ordre F124, de manière à augmenter le flux d'air extrait F40 traversant chacune des bouches d'extraction 40. En effet, chacune des bouches d'extraction 40 étant située dans une pièce où les activités des occupants sont susceptibles de dégager de l'humidité, il est avantageux d'augmenter le flux d'air dans chacune de ces pièces, de manière à ramener rapidement le taux d'humidité sous le seuil de confort associé.

Ainsi, on comprend que plus l'installation de ventilation 20 est complexe, avec de nombreux accessoires de ventilations, et plus il est possible d'implémenter des stratégies de ventilations efficaces, permettant de ramener rapidement l'air en cas de dépassement d'un ou plusieurs seuils de confort.

L'utilisation de capteurs 110 déportés est particulièrement avantageuse, car elle permet de détecter la libération de polluants au plus près de la source potentielle, et d'ainsi de choisir la stratégie de ventilation la plus adaptée. En variante non représentée, la station de mesure 100 comprend un capteur déporté qui est situé à l'extérieur du local 22, par exemple un capteur de température, ou un capteur de particules. Ainsi, il est possible de moduler la stratégie de ventilation, par exemple pour limiter le flux d'air entrant si l'air extérieur est à une température inconfortable, trop froid l'hiver ou trop chaud l'été, ou bien si l'air extérieur est trop pollué, par exemple chargé en particules à cause du trafic automobile.

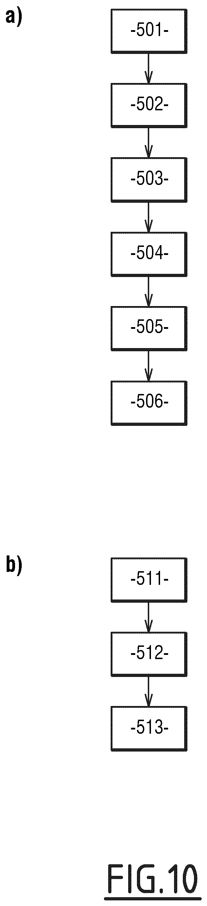

Comme illustré par la figure 10, les installations de ventilation 20 présentées dans les divers modes de réalisation décrits précédemment permettent la mise en œuvre d'une méthode de pilotage, qui comprend :
- une étape 501 pour la fourniture d'une station de mesure 100 et au moins un accessoire de ventilation,
- ensuite, une étape 502 pour l'appairage de chaque accessoire de ventilation à la station de mesure 100, au moyen de l'unité électronique de contrôle 126 de la station de mesure 100, de manière à déterminer la configuration globale de l'installation de ventilation 20,
- ensuite, une étape 503, pour la détermination du scénario de ventilation préféré, au moyen de l'unité électronique de contrôle 126 et en considérant la configuration globale.

De préférence, le scénario de ventilation préféré est choisi parmi plusieurs scénarios de ventilation préalablement enregistrés dans la mémoire 129 de l'unité électronique de contrôle. Alternativement, une fois que la configuration globale de l'installation de ventilation 20 est déterminée, l'installateur 20 interroge un serveur distant, par exemple à l'aide de son smartphone, le serveur distant élaborant un scénario de ventilation sur la base de la configuration globale, ce scénario de ventilation étant ensuite chargé par l'installateur dans la mémoire 129 de l'unité de contrôle et devenant le scénario préféré.

La station de mesure 100 est alors prête à être utilisée.

La méthode de pilotage comprend ensuite :
- une étape 504, pour la mesure, au moyen d'au moins un capteur de mesure 110, d'au moins un paramètre de qualité de l'air,
- ensuite, une étape 505, pour la détermination, en fonction de la ou des mesures du au moins un capteur de mesure et du scénario de ventilation préféré et au moyen de l'unité électronique de contrôle 126, et en considérant le scénario de ventilation préféré, d'un ou plusieurs ordres à transmettre à chaque accessoire de ventilation, chaque ordre étant associé à un accessoire de ventilation respectif, puis
- une étape 506, pour la transmission, à chaque accessoire de ventilation, de l'ordre associé à cet accessoire de ventilation, de sorte que l'accessoire de ventilation considéré change d'état de fonctionnement, de manière à améliorer au moins un paramètre de qualité de l'air.

Avantageusement, la méthode de pilotage comprend aussi :
- une étape 511, pour l'envoi, à un serveur distant et au moyen d'une passerelle Internet de la station de mesure 100, de données relatives aux mesures de qualité de l'air et à la configuration globale, puis
- une étape 512, pour la réception, en provenance du serveur distant, d'un scenario additionnel de ventilation, le scénario additionnel étant élaboré par le serveur distant sur la base des données transmises par la station de mesure au serveur distant.
- une étape 513 ; pour l'enregistrement du scénario additionnel dans la mémoire 129 de l'unité électronique de contrôle 126, le scénario additionnel devenant le scénario de ventilation préféré.

Autrement dit, le scénario additionnel nouvellement enregistré remplace le scénario préféré choisi précédemment au cours de l'étape 503 de détermination.

De préférence, le scénario additionnel de ventilation est élaboré en utilisant des méthodes d'apprentissage automatique.

Selon une autre variante avantageuse, le ou les scénarii de ventilation sont mis à jour lors de la mise en route de l'installation de ventilation 20 au cours d'une étape d'initialisation, qui a lieu avant l'étape 503 de détermination du scénario préféré. L'étape d'initialisation est par exemple une sous-étape de l'étape d'appairage 502.

Avantageusement, le capteur 110 / 210 est associé à un module mémoire - non représenté - dans lequel sont enregistrés un ou plusieurs scénarii de ventilation. Lors de l'étape d'initialisation, le ou les scénarii de ventilation sont transmis du module mémoire du capteur 110/210 à la mémoire 129 de l'unité de contrôle 126. Ensuite, au cours de l'étape 503 de détermination, l'unité de contrôle 120 détermine lequel parmi les scénarii de ventilation transmis au cours de l'étape d'initialisation devient le scénario de ventilation préféré, en fonction de la configuration réelle de l'installation de ventilation 20.

De préférence, avant l'étape d'initialisation, au moins un scénario de ventilation est préalablement enregistré dans la mémoire 129 de l'unité de contrôle 126, de sorte que l'installation de ventilation puisse être opérationnelle même en cas de dysfonctionnement de l'étape d'initialisation. Si l'étape d'initialisation se déroule correctement, alors le ou les scénarii de ventilation initialement enregistrés dans la mémoire 129 sont effacés, et replacés par les nouveaux scénarii de ventilation transmis lors de l'étape d'initialisation.

Lorsque le capteur 110 est un capteur intégré, au cours de l'étape d'initialisation, la transmission du scénario de ventilation depuis le module mémoire vers la mémoire 129 de l'unité de contrôle 126 se fait de manière interne à la station de mesure 100, de préférence via des connexions physiques. Lorsque le capteur 210 est un capteur déporté, par exemple lorsque le capteur 210 fait partie d'une bouche de ventilation, d'un caisson de ventilation, d'un registre, etc., la transmission du scénario de ventilation préféré depuis le module mémoire vers la mémoire 129 de l'unité de contrôle 126 se fait via les moyens de communication 120, de préférence au cours de l'étape d'appairage 502.

Selon un exemple d'utilisation, le scénario préféré dépend du pays dans lequel l'installation de ventilation 20 est appelée à être installé. En particulier, le scénario préféré permet de respecter les normes sanitaires en matière de débit de ventilation. Par exemple, selon le type et la concentration de polluants mesurés, humidité ou CO₂, les débits applicables varient selon les pays.

Ainsi, lors de la fabrication du capteur 110/210, le fait que le ou les scénarii de ventilation préférés, adaptés au pays considéré, soient déjà enregistrés dans le module mémoire, fait que dès la première mise en route de l'installation de ventilation 20, à l'issue de l'étape 503 de détermination, l'installation de ventilation 20 est conforme aux normes locales, sans nécessiter d'intervention spécifique de l'installateur, ni de connexion entre la station de mesure 200 et Internet. En outre, le fait de lier les capteurs 110 / 210 au module mémoire dans lequel sont enregistrées les scénarii de ventilation, de préférence dans le même élément modulaire, par exemple dans le module de mesure 112, permet de faciliter la fabrication, en limitant le nombre de références et/ou le nombre de manipulation.

Les modes de réalisation et les variantes mentionnées ci-dessus peuvent être combinés entre eux pour générer de nouveaux modes de réalisation de l'invention.

## Revendications

1. Station de mesure (100) pour une installation de ventilation (20), la station de mesure (100) étant configurée pour mesurer au moins un paramètre de qualité de l'air et pour piloter au moins un accessoire de ventilation (40 ; 50 ; 60) de l'installation de ventilation (20), la station de mesure (100) comprenant :
- au moins un capteur (110 ; 210) d'un paramètre de qualité de l'air autour de la station de mesure (100), le capteur étant soit un capteur intégré (110), qui est reçu dans un boitier (102) de la station de mesure (100), soit un capteur déporté (210), qui est situé à l'extérieur et à distance du boitier,
- des moyens de communication (120), qui incluent :
• des moyens de transmission (124), qui sont configurés pour transmettre à chaque accessoire de ventilation (40 ; 50 ; 60), préalablement appairé à la station de mesure (100), des ordres relatifs à des états de fonctionnement de l'accessoire de ventilation (40 ; 50 ; 60) considéré,
- une unité électronique de contrôle (126), qui comprend une unité de calcul (128) et une mémoire (129), et qui est configurée :
• pour déterminer, en fonction de la configuration globale, un scénario de ventilation préféré,
• pour recevoir des valeurs mesurées par le capteur (110 ; 210) de mesure et pour déterminer, en fonction des valeurs reçues et d'un scénario de ventilation préféré, les ordres à envoyer à chaque accessoire de ventilation (40 ; 50 ; 60),
dans lequel :
- les moyens de communication (120) incluent des moyens de réception (122), qui sont configurés pour recevoir des informations de configuration relatives au type de chaque accessoire de ventilation (40 ; 50 ; 60) et au nombre d'accessoires de ventilations de chaque type, de manière à appairer chaque accessoire de ventilation (40 ; 50 ; 60) à la station de mesure (100), l'ensemble des informations de configuration reçues formant une configuration globale de l'installation de ventilation (20).

2. Station de mesure (100) selon la revendication 1, dans laquelle :
- le au moins un capteur (110 ; 210) inclut un capteur de température et un capteur d'humidité.

3. Station de mesure (100) selon la revendication 2, dans laquelle :
- le au moins un capteur (110 ; 210) inclut, en outre, au moins un capteur additionnel choisi parmi un capteur de CO₂, un capteur de particules, un capteur de composés organiques volatils, un capteur de NOx, un capteur de SOx, et un capteur de formaldéhyde.

4. Station de mesure (100) selon l'une quelconque des revendications 1 à 3, dans laquelle :
- le au moins un capteur (110) inclut un capteur intégré, la station de mesure (100) comprenant un module de mesure (112), qui est reçu dans un boitier (102) de la station de mesure (100) et qui est interchangeable, le capteur intégré (110) faisant partie du module de mesure (112).

5. Station de mesure (100) selon l'une quelconque des revendications 1 à 4, dans laquelle les moyens de transmission (124) sont des moyens de communication (120) sans fil, qui fonctionnent selon un protocole de communication choisi dans une liste incluant les protocoles :
- Bluetooth, défini par la norme IEEE 802.15.1:2005,
- Bluetooth en réseau maillé, tel que défini par la norme IEEE 802.15.4:2009,
- BLE, LoRa(WAN), ZigBee, tels que définis par la norme IEEE 802.15.4:2020.

6. Station de mesure (100) selon l'une quelconque des revendications 1 à 5, dans laquelle :
- les moyens de réception (122) sont aptes à échanger des informations avec un smartphone, par exemple selon un protocole Bluetooth, tel que défini par la norme IEEE 802.15.1:2005, ou WiFi, tel que défini par la norme IEEE 802.11:2016 et ses révisions ou évolutions ultérieures, pour la réception des informations de configuration.

7. Station de mesure (100) selon l'une quelconque des revendications 1 à 6, dans laquelle :
- le au moins un capteur (210) inclut un capteur déporté, les moyens de réception (122) étant aptes à recevoir des informations en provenance du capteur déporté, notamment un capteur extérieur, le capteur déporté étant distinct du module de mesure (112) et étant configuré pour mesurer un paramètre de qualité de l'air.

8. Station de mesure (100) selon l'une quelconque des revendications 1 à 7, dans laquelle :
- les moyens de communication (120) incluent une passerelle Internet, la station de mesure (100) étant configurée pour échanger des données avec un serveur distant,
- la station de mesure (100) est configurée pour :
• envoyer au serveur distant des données relatives aux mesures de qualité de l'air et à la configuration globale, et
• recevoir en provenance du serveur distant un scenario additionnel de ventilation et pour enregistrer le scénario additionnel dans la mémoire (129) de l'unité électronique de contrôle (126), le scénario additionnel devenant le scénario de ventilation préféré.

9. Station de mesure (100) selon l'une quelconque des revendications 1 à 8, dans laquelle :
- le au moins un capteur (110 ; 210) inclut un module de mémoire, dans lequel sont enregistrés un ou plusieurs scénarii de ventilation,
- la station de mesure est configurée :
• pour recevoir le ou les scénarii de ventilation enregistrés dans le module mémoire du capteur (110 ; 210), puis
• pour enregistrer ledit ou lesdits scénarii de ventilation dans la mémoire (129) de l'unité de contrôle (126), puis
• le scénario de ventilation préféré est le scénario ou l'un des scenarii transmis depuis le module mémoire du capteur (110 ; 210).

10. Accessoire de ventilation (40 ; 50 ; 60), propre à être appairé à la station de mesure (100) conforme à l'une quelconque des revendications 1 à 9, l'accessoire de ventilation (40 ; 50 ; 60) comprenant :
- un passage d'air (42),
- au moins un organe d'actionnement (44 ; 62), qui est commutable entre plusieurs configurations, de manière à influer sur le débit d'air au travers du passage d'air, chaque configuration de l'organe d'actionnement étant associée à un état de fonctionnement de l'accessoire de ventilation (40 ; 50 ; 60),
- un identifiant unique, par exemple sous la forme d'un QR code, et/ou d'une une puce électronique RFID ou NFC, l'identifiant unique étant associé de manière univoque au type de l'accessoire de ventilation (40 ; 50 ; 60) considéré et étant prévu pour l'appairage de l'accessoire de ventilation (40 ; 50 ; 60) à la station de mesure (100),
- des moyens complémentaires de transmission (47), qui sont configurés pour coopérer avec les moyens de transmission (124) de la station de mesure (100) de sorte que, une fois que l'accessoire de ventilation (40 ; 50 ; 60) est appairé à la station de mesure (100), l'accessoire de ventilation (40 ; 50 ; 60) est apte à recevoir des ordres (F124) en provenance de la station de mesure (100) et apte à basculer entre les états de fonctionnements de l'accessoire de ventilation (40 ; 50 ; 60) considéré.

11. Accessoire de ventilation (40 ; 50 ; 60) selon la revendication 10, dans lequel :
- l'accessoire de ventilation inclut un capteur déporté (210), qui est configuré pour mesurer un paramètre de qualité de l'air, l'accessoire de ventilation étant configuré pour coopérer avec les moyens de transmission (124) et/ou avec les moyens de réception (122) de la station de mesure (100), de manière à transmettre les résultats des mesures du capteur déporté à la station de mesure.

12. Installation de ventilation (20), comprenant :
- la station de mesure (100) selon l'une quelconque des revendications 1 à 9,
- au moins un accessoire de ventilation (40 ; 50 ; 60) conforme à l'une quelconque des revendications 10 ou 11,
dans laquelle chaque accessoire de ventilation est configuré pour être appairé à la station de mesure.

13. Méthode de pilotage d'une installation de ventilation (20), la méthode de pilotage comprenant :
- la fourniture (501) d'une station de mesure (100) et au moins un accessoire de ventilation (40 ; 50 ; 60), puis
- l'appairage (502) de chaque accessoire de ventilation (40 ; 50 ; 60) à la station de mesure (100), au moyen d'une unité électronique de contrôle de la station de mesure (100), de manière à déterminer la configuration globale de l'installation de ventilation (20), puis
- la détermination (503) d'un scénario de ventilation préféré, au moyen de l'unité électronique de contrôle et en considérant la configuration globale, puis
- la mesure (504), au moyen d'au moins un capteur de mesure, d'au moins un paramètre de qualité de l'air, puis
- la détermination (505), en fonction de la ou des mesures du au moins un capteur de mesure et du scénario de ventilation préféré et au moyen de l'unité électronique de contrôle, d'un ou plusieurs ordres à transmettre à chaque accessoire de ventilation (40 ; 50 ; 60), chaque ordre étant associé à un accessoire de ventilation (40 ; 50 ; 60) respectif, puis
- la transmission (506), à chaque accessoire de ventilation (40 ; 50 ; 60), de l'ordre associé à cet accessoire de ventilation (40 ; 50 ; 60), de sorte que l'accessoire de ventilation change d'état de fonctionnement.

14. Méthode de pilotage selon la revendication 13, dans laquelle :
- la méthode de pilotage comprend, en outre, une étape d'initialisation, qui est antérieure à l'étape de détermination (503) et au cours de laquelle un ou plusieurs scénarii de ventilation sont transmis depuis un module mémoire du capteur (110 / 210) vers la mémoire (129) de l'unité de contrôle (126),
- au cours de l'étape de détermination (503), le scénario de ventilation préféré est choisi parmi le ou les scénarii de ventilation transmis au cours de l'étape d'initialisation.

15. Méthode de pilotage selon l'une quelconque des revendications 13 ou 14, comprenant en outre :
- l'envoi (511), à un serveur distant et au moyen d'une passerelle Internet de la station de mesure (100), de données relatives aux mesures de qualité de l'air et à la configuration globale, puis
- la réception (512), en provenance du serveur distant, d'un scenario additionnel de ventilation, le scénario additionnel étant élaboré sur la base des données transmises par la station de mesure (100) au serveur distant, puis
- l'enregistrement (513) du scénario additionnel dans la mémoire (129) de l'unité électronique de contrôle (126), le scénario additionnel devenant le scénario de ventilation préféré.

16. Méthode de pilotage selon la revendication 15, dans laquelle :
- le scénario additionnel de ventilation est élaboré en utilisant des méthodes d'apprentissage automatique.
